# EUROPEAN PATENT APPLICATION

(11) **EP 4 559 653 A1**
(43) Date of publication of application: **28.05.2025**
(21) Application number: 24211490.8
(22) Date of filing: 07.11.2024
(51) Int. Cl.: B29B 17/04, B29B 17/02

(54) **SYSTEM AND METHOD FOR THE REMOVAL OF A PLASTIC FILM FROM METAL OBJECTS WITH A LIQUID UNDER HIGH PRESSURE**

(30) Priority: 24.11.2023 NL 2036347
(71) Applicant: Agmi Traffic B.V., 5932 AC Tegelen (NL)
(72) Inventor: KACIMI, Ahmed, TEGELEN (NL); VAN DE GEVEL, Francisca Adriana Mathea, TEGELEN (NL)
(74) Representative: Algemeen Octrooi- en Merkenbureau B.V.

(57) **Abstract**

System for the removal of a plastic film from metal objects, in particular traffic signs, with a liquid under high pressure, wherein the high pressure is in the range of from 1800 to 2800 bar, wherein the system comprises:
- at least one liquid reservoir arranged to store the liquid;
- a removal arrangement, comprising:
- at least one nozzle configured to remove, with the liquid under high pressure, the plastic film from the metal objects;
- a high-pressure pump arranged to supply the liquid from the at least one liquid reservoir to the at least one nozzle under pressure;

characterized in that, the system further comprises:
- a liquid reuse unit configured to reuse the by the removal arrangement used liquid and to purify the used liquid with a filter mechanism to return filtered liquid to the at least one liquid reservoir, wherein the filter mechanism is configured such that the filtered liquid comprises particles having a particle size of at most 10 µm.

Method for the removal of a plastic film from metal objects, in particular traffic signs, with a liquid under high pressure.

## Description

The present invention relates to a system for the removal of a plastic film from metal objects, in particular traffic signs, with a liquid under high pressure. Further, the present invention relates to a method for the removal of a plastic film from metal objects with a liquid under high pressure.

### BACKGROUND

Objects made of metal, in particular aluminium objects, are extremely suitable to serve as a surface on which markings can be applied. Aluminium is a light-weight metal and can withstand corrosion by air and water making it an interesting material for outdoor applications. The material is for example used to make traffic signs. Other metals, such as steel protected with zinc, can also be used for this application, but are often more expensive or heavier than aluminium and thus, less suitable, depending on the application.

A (self adhesive) plastic film is applied on the surface, in case of a traffic sign a flat surface, of the metal object. The plastic film can comprise a certain message, such as in case of a traffic sign, an instruction for road users. In general, the plastic film is more vulnerable than the metal object, such as an aluminium sign, on which the plastic film is applied. The film is thus more sensitive to damage which can make the instructions on the sign unclear over time and may need replacement. Replacement of the sign may also be necessary due to vandalism, such as graffiti.

A dirty road sign may be cleaned and reused in certain cases. In other cases, the (film on) the road sign is damaged, and cleaning and reusing is not possible. Het road sign is than discharged or at least recycled for a reuse.

To enable reusing the materials, it is necessary that the plastic if separated well from the aluminium. This can be done by burning off the film of the aluminium or by removing it with chemicals. Burning and chemical treatments are, however, from an environmental and energy perspective undesirable and a more sustainable option is preferred.

A more sustainable option is by removing the film from the aluminium with water under high pressure. This requires less energy than burning and no chemicals are needed that requires additional measures for safety and the environment, such as correct storage and disposal of (residual) chemicals and optionally the processing of released harmful gases.

However, in the removal of the film with water under high pressure, large amounts of water are used, and plastic film residuals are present in the used water thereby contaminating the water. Additionally, more governments require that materials be reused and/or recycled. For example, the Dutch government wants that in 2025 at least 50% of all plastics are recycled and in 2030 at least 55%. Existing solutions for the removal of plastic film from the aluminium do not provide a suitable solution to meet the foregoing objectives.

There exists a need to a system that at least partly solves one or more of the foregoing problems and meets government requirements in relation to the recycling and reuse of materials.

### OBJECT OF THE INVENTION

It is therefore an object of the present invention to provide for an improved system which can separate plastic film from metal objects, in particular a more sustainable system which can separate plastic film from metal objects.

### SUMMARY OF THE INVENTION

At least one of the foregoing objects is achieved according to a first aspect of the present disclosure that relates to system for the removal of a plastic film from metal objects, in particular traffic signs, with a liquid under high pressure, wherein the high pressure is in the range of from 1800 to 2800 bar, wherein the system comprises:
- at least one liquid reservoir arranged to store the liquid;
- a removal arrangement, comprising:
   - at least one nozzle configured to remove, with the liquid under high pressure, the plastic film from the metal objects;
   - a high-pressure pump arranged to supply the liquid from the at least one liquid reservoir to the at least one nozzle under pressure;
   characterized in that, the system further comprises:
- a liquid reuse unit configured to reuse the by the removal arrangement used liquid and to purify the used liquid with a filter mechanism to return filtered liquid to the at least one liquid reservoir, wherein the filter mechanism is configured such that the filtered liquid comprises particles having a particle size of at most 10 µm.

With "improved" as used in the present disclosure is meant that with the system plastic film can be removed from the metal objects more efficient and with a better result.

With "more sustainable" as used in the present disclosure is meant that the plastic film and metal objects can be reused and recycled, after the plastic film is removed from the metal objects with the system according to the present disclosure.

The system according to the first aspect of the present disclosure has the benefit that the liquid, in which remains of the removed plastic film are present, is filtered and subsequently can be reused, such that large amounts of liquid van be saved.

An especially suitable liquid for the removal of plastic film is water. Because water can be used in the system for the removal of a plastic film from metal objects, the system is more interesting from an environmental and energy perspective.

The filter mechanism in the liquid reuse unit filters solid particles out of the used liquid, for example water, such that a filtered liquid is obtained in which any particles present have a particle size of at most 10 µm (micrometre). This reduces the risk of pipes, pumps, nozzles, and/or other components of the system according to the present disclosure becoming clogged due to solid particles in the liquid.

The from the liquid filtered plastic film particles are collected and these can be reused, for example as filling material in another application. This allows requirements of the (local) governments to recycle and reuse more plastics to be met.

Another advantage is that the metal objects are free from plastic and can be reused. In case of a traffic sign, it could get a new life as a traffic sign, if the respective traffic sign has no significant damages. If a traffic sign has too many damages, the metal (aluminium) can be molten and used for another purpose. In other words, the system according to the first aspect of the present disclosure is especially suitable to separate different type of material from each other, such as plastic from aluminium.

The system according to the first aspect of the present disclosure further comprises a liquid collecting unit configured to collect rainwater and to purify the rainwater using a further filter mechanism to supply filtered rainwater to the at least one liquid reservoir, wherein the filtered rainwater comprises particles having a particle size of at most 10 µm. The liquid collecting unit provides the possibility to use rainwater for the removal of the plastic from the metal objects and/or for the cleaning of the nozzles and/or metal objects.

A second aspect of the present disclosure relates to a method for the removal of a plastic film from metal objects, in particular traffic signs, with a liquid under high pressure, the method comprising the steps of:
1) removing the plastic film from the metal objects with the liquid under high pressure, wherein the high pressure is in the range of from 1800 to 2800 bar;
2) filtering the liquid used to remove the plastic film from the metal objects, such that the filtered liquid comprises particles having a particle size of at most 10 µm;
3) reusing the in step 2) filtered liquid to remove the plastic film from the metal objects.

Embodiments disclosed hereafter of the first aspect of the present disclosure are also applicable to the method (second aspect) of the present disclosure, unless otherwise mentioned.

### SHORT DESCRIPTION OF THE DRAWINGS

The present disclosure is hereinafter explained in more detail with reference to the accompanying drawings in which embodiments of the present disclosure are shown and in which like reference numbers indicate the same or similar elements. The present disclosure is by no means limited to the embodiments described therein.
Fig. 1 schematically and illustratively shows a top view of an example of the system;
Fig. 2A schematically and illustratively shows a side view of an example of a part of the system;
Fig. 2B schematically and illustratively shows a top view of an example of a part of the system;
Fig. 3 schematically and illustratively shows an example of the system;
Fig. 4 shows a flowchart of a method.

### DETAILLED DESCRIPTION OF THE EMBODIMENTS

The system and method are explained below with a detailed description.

In an embodiment, the system for the removal of a plastic film from metal objects, in particular traffic signs, with a liquid under high pressure, wherein the high pressure is in the range of from 1800 to 2800 bar, wherein the system comprises:
- at least one liquid reservoir arranged to store the liquid;
- a removal arrangement, comprising:
- at least one nozzle configured to remove, with the liquid under high pressure, the plastic film from the metal objects;
- a high-pressure pump arranged to supply the liquid from the at least one liquid reservoir under the high pressure to the at least one nozzle;
characterized in that, the system further comprises:
- a liquid reuse unit configured to reuse the by the removal arrangement used liquid and to purify the used liquid with a filter mechanism to return filtered liquid to the at least one liquid reservoir, wherein the filter mechanism is configured such that the filtered liquid comprises particles having a particle size of at most 10 µm,
wherein the system comprises a liquid collecting unit configured to collect rainwater and to purify the rainwater using a further filter mechanism to supply filtered rainwater to the at least one liquid reservoir, wherein the filtered rainwater comprises particles having a particle size of at most 10 µm.

In an embodiment, the liquid reservoir comprises a pump, for example a floating pump, that pumps liquid from the liquid reservoir to the high-pressure pump via the piping.

The system may comprise a collecting reservoir, or collecting tank, placed below the removal arrangement and arranged such that collected used liquid is supplied to the liquid reuse unit. In this way, more of the used liquid can be filtered and reused in the system.

The system may also comprise a transportation means, such as a conveyor belt, arranged for transporting the metal objects in a transportation direction. This has the benefit that the system does not need be shut down to replace metal objects from which the plastic film has been removed with metal objects comprising plastic film that has to be removed. The system can run continuous, because new still to be treated metal objects can be placed at the start of the transportation means and already treated metal objects can be removed at the end of the transportation means.

Preferably, the transportation means, such as a conveyor belt, has a transportation speed of at most 8 m/min, more preferably 2 to 7 m/min, most preferably 4 to 6 m/min. In this way, an optimal balance is established between on the one hand the flow rate of objects on the belt and on the other hand quality or effectiveness of the removal of the film from the metal objects. The desired transportation speed also depends on the thickness of the plastic film that is to be removed on, for example, the traffic sign, the pressure of the high-pressure pump, the number and shape of the nozzle(s) and/or the number of holes in the nozzle.

In an embodiment, the high pressure is in the range of from 2100 to 2700 bar, preferably 2400 to 2600 bar. A pressure in this range has the advantage that it improves the removal of the plastic film from the metal objects. It provides on the one hand a better balance between the efficiency of the removal of the plastic film and on the other hand it keeps the energy and liquid consumption as low as possible. In addition, the chance of damage to the metal object with such pressure is excluded or at least almost excluded, such that the metal object after removal of the plastic film is ready for reuse.

In an embodiment, the filtered liquid comprises particles having a particle size of at most 5 µm. Such a particle size further reduces the chance of clogging in piping, pumps, nozzles, and/or other components of the system.

In another embodiment, the filter mechanism is configured such that the filtered liquid comprises particles having a particle size of at most 5 µm. Such a particle size further reduces the chance of clogging in piping, pumps, nozzles, and/or other components of the system.

Determining the particle size of the particles in the used liquid may be done according to any conventional measurement technique, for example according to ISO 13320:2020.

In an embodiment, the at least one nozzle is provided with a rotor, arranged for making rotational movements about a rotation axis. The rotational movements of the nozzle provided with the rotor allow improved removal of the plastic film from the metal objects.

The rotor may rotate at a speed of at most 2500 rpm, preferably 1000 to 2200 rpm, more preferably 1700 to 2000 rpm. With such a speed, the film can be effectively removed from the metal objects, such as traffic signs.

In an embodiment, the at least one nozzle sprays the liquid towards the plastic film on the metal objects at an angle of at most 15 degrees relative to a perpendicular oriented to a surface of the plastic film of the metal objects, preferably at most 10 degrees, more preferably at most 5 degrees. Removal of the plastic film at such an angle and in addition, film residuals splash less far making it easier to collect them.

In an embodiment, the at least one nozzle is arrangeable at an angle of at most 15 degrees relative to a perpendicular oriented to a surface of the plastic film of the metal objects, preferably at most 10 degrees, more preferably at most 5 degrees, for spraying the liquid towards the metal objects. With such an arrangement, the liquid is sprayed on the metal objects comprising plastic film under the above-mentioned angle. Removal of the plastic film at such an angle and in addition, film residuals splash less far making it easier to collect them.

The skilled person will understand that with "at most 15 degrees relative to a perpendicular" is meant that this relates to a range of from plus 15 degrees to minus 15 degrees relative to a perpendicular oriented to a surface of the plastic film of the metal objects.

In an embodiment, the at least one nozzle is provided with 4 to 16 spray holes, preferably 8 to 12 spray holes. This has the advantage that the plastic film can be removed from the surface of the metal objects faster and easier.

In an embodiment, the at least one nozzle has a shape having at least two arms, wherein spray holes of the nozzle are distributed, preferably evenly distributed, over the at least two arms. With such a shape, the plastic film can be removed with higher efficiency from the metal objects, especially if the at least one nozzle comprises a rotor. The at least one nozzle may also have one arm.

In an embodiment, the at least one nozzle is configured to be adjustable in a height direction, preferably adjustable in height by at most 30 mm. By being able to adjust the height of the nozzle, metal objects having different thicknesses and/or metal objects with plastic film having different thicknesses can be treated, wherein the nozzle can be positioned at the desired distance from the surface of the metal objects with plastic film for more efficient removal of the film.

In an embodiment, the at least one nozzle is configured to be adjustable in a height direction, preferably adjustable in height by at most 30 mm relative to a surface of the metal objects facing towards the at least one nozzle. By being able to adjust the height of the nozzle, metal objects having different thicknesses and/or metal objects with plastic film having different thicknesses can be treated, wherein the nozzle can be positioned at the desired distance from the surface of the metal objects with plastic film for more efficient removal of the film.

The nozzle preferably has a diameter in the range of from 150 to 350 mm.

In an embodiment, the system comprises a cleaning arrangement to clean the at least one nozzle and/or metal objects. The system may comprise multiple cleaning arrangements, wherein the one cleaning arrangement may be used to clean the nozzle(s) and another cleaning arrangement may be used for rinsing/spraying clean the metal objects from which the film is removed. With the one or more cleaning arrangements, the one or more nozzle(s) can be kept clean longer and can be cleaned better. This means that less maintenance is required on the system. In addition, the surface of the metal objects where there may be residues of plastic film left after the film has been removed, can be sprayed clean.

In an embodiment, the filtered rainwater comprises particles having a particle size of at most 5 µm. The liquid collecting unit provides the possibility to use rainwater for the removal of the plastic from the metal objects and/or for the cleaning of the nozzles and/or metal objects. By filtering the rainwater, the chance of clogging of piping, pumps, nozzles, and/or other components of the system is significantly reduced.

The liquid collecting unit or just the further filter mechanism thereof may be the same as the respective liquid reuse unit or the filter mechanism.

In an embodiment, the system comprises a frame and the at least one nozzle is attached to the frame as end effector and is configured to move back and forth in a transverse direction. This has the benefit that the liquid can be used more efficiently in the removal of the plastic film from the metal objects by only spraying the liquid on the parts from the which the film is to be removed. This reduces the water usage required per square meter of film to be removed and with that, the energy usage.

In an embodiment, the system comprises a motor, arranged to drive the high-pressure pump, wherein the motor preferably is an electric motor. The advantage of an electric motor relative to a conventional motor, such as a diesel motor, is that a significant reduction in greenhouse gas and/or soot emissions is achieved by the system. Especially, in case the electric motor is powered by green energy, in particular decentrally generated green energy, for example through geothermal energy, hydropower, wind energy and/or solar energy.

In an embodiment, the system comprises an encoder, configured to determine a position of the at least one nozzle. This allows to determine where the at least one nozzle should spray to remove the film from the metal objects, such that spraying can be done more efficiently, resulting in lower fluid and/or energy consumption.

Preferably, the system has a liquid usage of from 12 to 25 L/min, more preferably from 18 to 22 L/min. A relatively limited water usage has the benefit that the dimensions of the liquid reservoir can be limited without having a significant impact on system operating times and/or usage, meaning the system will take up relatively little space.

In an embodiment, the system comprises a control unit to control the pressure in the high-pressure pump and/or the position of the at least one nozzle. This has the effect that the system can be controlled with higher accuracy, so that water can be used more efficient in the removal of the plastic film from the metal objects, for example the aluminium traffic signs.

In an embodiment, the system is provided with closing means, such as plates or blocks, for partially closing of the removal arrangement. The closing means can be placed laterally and/or at the bottom side of the area where the film is removed. This has the advantage that the components of the systems, such as the cleaning arrangement and the transportation means, can be kept clean for a longer period of time. This is because less film residue sticks to the various components, such as for example to the belt or drive chain of the transportation means. This results in less maintenance and the system has less downtime. Another benefit is that noise, caused by the spraying of the liquid with high pressure on the metal objects, can be strongly reduced.

The method for the removal of a plastic film from metal objects, in particular traffic signs, with a liquid under high pressure can be executed with the system according to the first aspect of the present disclosure.

The method may further comprise the step(s) of:
0) placing the metal objects, provided with the plastic film, on a transportation means, wherein the plastic film is directed to the at least one nozzle; and/or
4) filling and/or repleting the liquid reservoir with filtered rainwater.

Preferably, step 0) is done before step 1) of the method according to the present disclosure.

Preferably, step 4) is done after step 3) of the method according to the present disclosure.

Other variations to the disclosed embodiments can be understood and effected by those skilled in the art in practicing the present disclosure, from a study of the drawings, the disclosure, and the appended claims. In the claims, the word "comprising" does not exclude other elements or steps, and the indefinite article "a" or "an" does not exclude a plurality. A single unit or component may fulfil the functions of several items recited in the claims. The mere fact that certain measures are recited in mutually different dependent claims does not indicate that a combination of these measured cannot be used to advantage. Any reference signs in the claims should not be construed as limiting the scope thereof.

The scope of the present disclosure is defined by the appended claims. One or more of the objects of the present disclosure are achieved by the appended claims.

### DETAILLED DESCRIPTION OF THE DRAWINGS

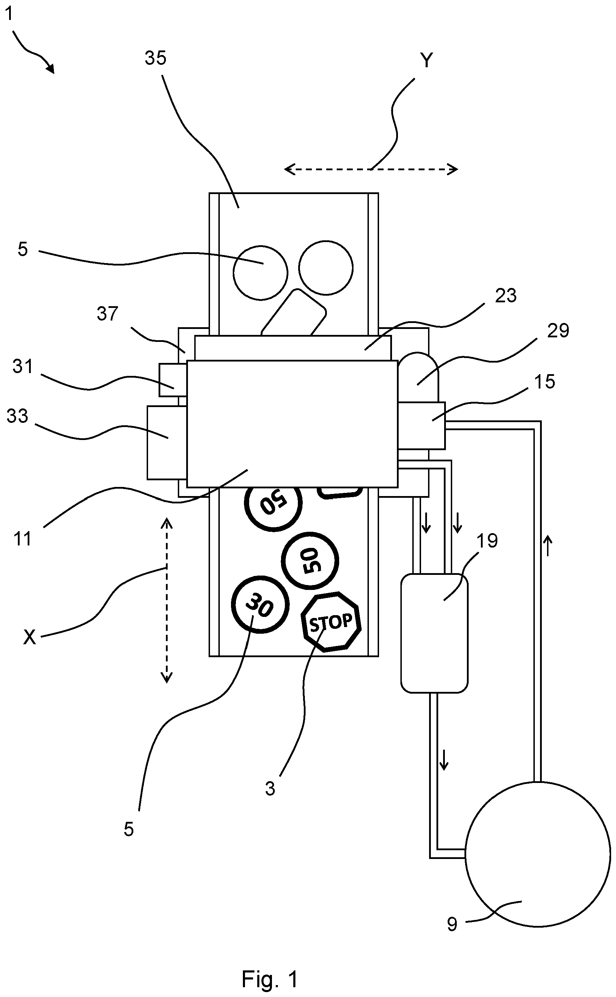

Fig. 1 shows a top view of an example of the system 1. In the system 1, metal objects 5, provided on a surface thereof with plastic film 3, are treated. In case of the system 1 of Fig. 1, the plastic film 5 is removed from traffic signs 5. This is done with a liquid 7 under high pressure. The pressure with which the film is removed is in the range of from 1800 to 2800 bar. At this pressure, the plastic film 3 comes loose from the surface of the metal objects 5, but the surface of the metal objects 5 is not damaged.

The system 1 comprises a liquid reservoir 9 for storing of the liquid 7 and a removal arrangement 11 for the removal of the plastic film 3 from the traffic signs 5. The removal arrangement 11 comprises at least one nozzle 13 and a high-pressure pump 15. The liquid 7 is supplied from the reservoir 9, or tank, to the high-pressure pump 15. The high-pressure pump 15, driven by a motor 29, is arranged for supplying the liquid 7 under pressure, which pressure is in the above-mentioned range, to the one or more nozzle(s) 13. The at least one nozzle 13 is configured to remove the plastic film 3 from the metal objects 5 (here: traffic signs) by means of liquid 7 under high pressure.

The system 1 of Fig. 1 further comprises a liquid reuse unit 19 for the collecting of used liquid 7, used by the removal arrangement 11 and the purifying of the used liquid 7 by means of a filter mechanism to supply filtered liquid 7 back to the liquid reservoir 9. The filtered liquid 7 may comprise particles, such as plastic particles. These particles have a particle size of at most 10 µm. This makes the filtered liquid 7 suitable for reuse in the system 1.

Fig. 1 shows that the system 1 comprises a transportation means 35, such as in this case a conveyor belt. The conveyor belt 35 is arranged for transporting of the traffic signs 5, each provided with the plastic film 3, in a transportation direction X to the removal arrangement 11. At the opposite side of the removal arrangement 11, traffic signs 11, or metal objects 5, exit the removal arrangement 11. When exiting, one can no longer really speak of 'traffic signs' here, because the film 3 has been removed from the metal objects 5 and these therefore no longer contain any instructions for road users.

A cleaning arrangement 23 is arranged on the side of the removal arrangement 11 where the metal objects 5 exit the removal arrangement 11 on the conveyor belt 35. The cleaning arrangement 23 is suitable for the cleaning of the nozzles 13 and/or the metal objects 5. During the removal of the film 3 from the metal objects 5, plastic film 3 parts may splash and stick to the nozzles 13. Also, plastic film 3 residues may fall on and stick to the treated traffic signs 5. With the cleaning arrangement 23, the nozzles 13 and/or metal objects 5 are cleaned by removing the plastic film 5 residues.

Furthermore, the system 1 is provided with an encoder 31, configured to determine a position P of each of the nozzles 13, and a control unit 33, suitable for controlling the pressure of the high-pressure pump 15 and the position P of each of the nozzles 13.

A collecting reservoir 37, or collecting tank, is positioned below the removal arrangement 11 and the cleaning arrangement 13 and arranged such that any collected used liquid 7 is supplied to the liquid reuse unit 19.

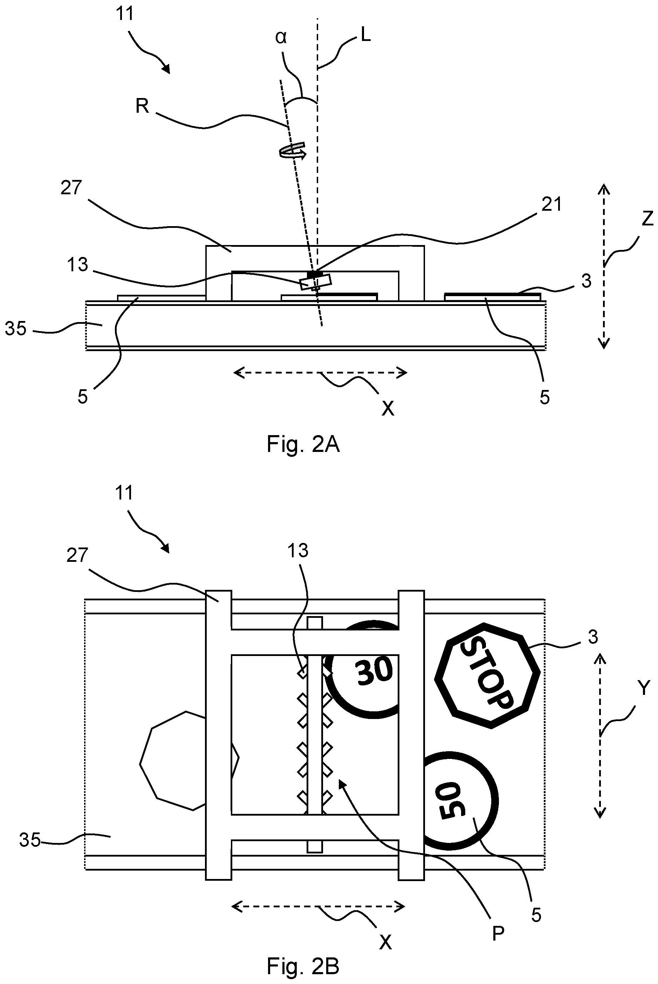

A side view of a part of the removal arrangement 11 of the system 1 is shown in Fig. 2A. Metal objects 5, provided with plastic film 3, are transported on transportation means 35 in the transportation direction X to the removal arrangement 11. The removal arrangement 11 comprises a frame 27 to which nozzles 13 are attached as end effector. The nozzle 13 is adjustable in height in a height direction Z, such that the nozzle 13 can be positioned at any desired distance from the surface the plastic film 3. Next to that, the nozzle 13 is provided with a rotor 21 arranged for making rotational movements about a ration axis R. The nozzle 13 sprays the liquid 7 by means of spray holes with which the nozzle 13 is provided under an angle α. The angle α under at the liquid 7 is sprayed is at most 15 degrees relative to a perpendicular L oriented to the surface of the film 3 of the metal objects 5. In other words, the nozzle 13 is arrangeable at an angle α of at most 15 degrees relative to a perpendicular L oriented to a surface of the plastic film 3 of the metal objects 5, preferably at most 10 degrees, more preferably at most 5 degrees, for spraying the liquid 7 towards the metal objects 5.

Fig. 2B shows a top view of a part of the removal arrangement 11 of the system 1. Four nozzles 13 are attached to the frame 27. Each of the nozzles 13 is provided with four arms and thus forms a cross. The cross-shaped nozzles 13 are provided with spray holes at the bottom side thereof (not visible). The nozzles 13 are configured to move back and forth in a transverse direction Y.

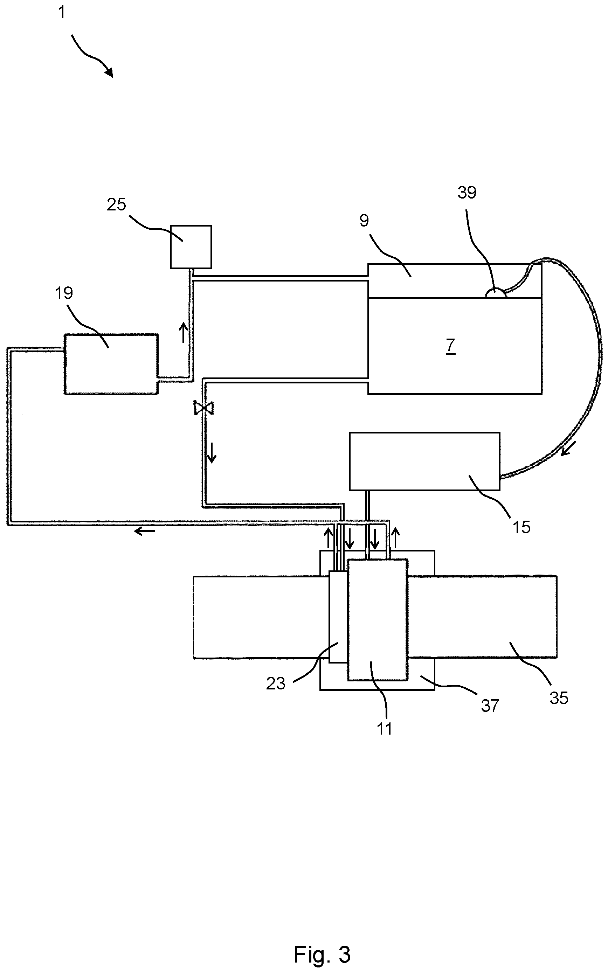

A schematic and illustrative representation of another example of the system 1 is shown in Fig. 3. The liquid 7, water in this case, is stored in the liquid reservoir 9 and is supplied to the high-pressure pump 15 by means of a floating pump 39. The high-pressure pump 15 supplies the liquid 7 under the desired pressure to the nozzles 13 in the removal arrangement 11. From the liquid reservoir 9, water 7 is also supplied to the cleaning arrangement 23. The used liquid 7 is collected and transported to the liquid reuse unit 19. In the liquid reuse unit 19, the used liquid 7 is filtered and transported back to the liquid reservoir 9.

The system 1 in Fig. 3 further comprises a liquid collecting unit 25 for collecting rainwater and purifying the rainwater by means of a further filter mechanism to transport filtered rainwater to the at least one liquid reservoir 9. In such a manner, rainwater can be used for the removal of the plastic film 3 from the metal objects 5 and for the cleaning of the nozzles 13 and/or the metal objects 5.

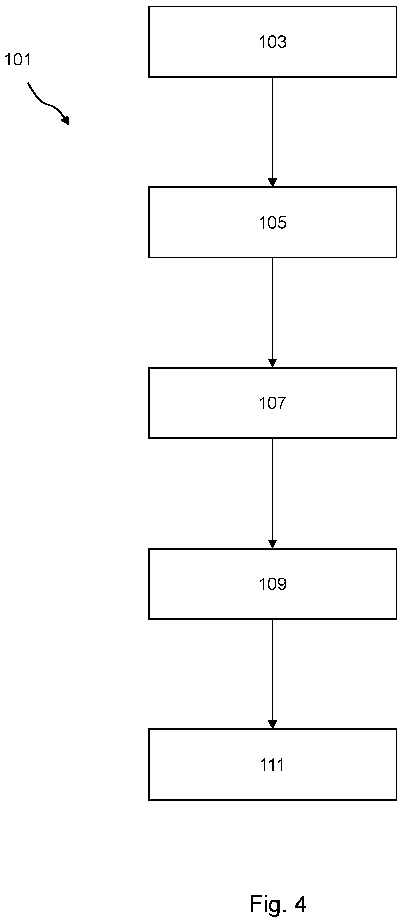

A flowchart of a method 101 is shown in Fig. 4. The method 101 is suitable for the removal of the plastic film 3 from the metal objects 5, in particular traffic signs, with a liquid 7 under high pressure with the system 1. The method 1 comprises a step of placing 103 the metal objects 5, provided with the plastic film 3, on the transportation means 35, wherein the plastic film 3 to directed towards the at least one nozzle 13. The method 101 as shown in Fig. 4 further comprises the steps of 1) removing 105 the film 3 from the metal objects 5 with the liquid 7 under high pressure, wherein the high pressure is in the range of from 1800 to 2800 bar; 2) filtering 107 the liquid used to remove the plastic film 3 from the metal objects 5 such that the filtered liquid 7 comprises particles having a particle size of at most 10µm; 3) reusing 109 the in step 2) filtered liquid 7 to remove the plastic film 3 from the metal objects 5; and 4) filling and/or repleting 111 the liquid reservoir 9 with filtered rainwater.

## Claims

1. System (1) for the removal of a plastic film (3) from metal objects (5), in particular traffic signs, with a liquid (7) under high pressure, wherein the high pressure is in the range of from 1800 to 2800 bar, wherein the system comprises:
- at least one liquid reservoir (9) arranged to store the liquid;
- a removal arrangement (11), comprising:
- at least one nozzle (13) configured to remove, with the liquid under high pressure, the plastic film from the metal objects;
- a high-pressure pump (15) arranged to supply the liquid from the at least one liquid reservoir to the at least one nozzle under pressure;
**characterized in that**, the system further comprises:
- a liquid reuse unit (19) configured to reuse the by the removal arrangement used liquid and to purify the used liquid with a filter mechanism to return filtered liquid to the at least one liquid reservoir, wherein the filter mechanism is configured such that the filtered liquid comprises particles having a particle size of at most 10 µm,
wherein the system comprises a liquid collecting unit (25) configured to collect rainwater and to purify the rainwater using a further filter mechanism to supply filtered rainwater to the at least one liquid reservoir, wherein the filtered rainwater comprises particles having a particle size of at most 10 µm.

2. System according to claim 1, wherein the high pressure is in the range of from 2100 to 2700 bar, preferably 2400 to 2600 bar.

3. System according to claim 1 or 2, wherein the filtered liquid comprises particles having a particle size of at most 5 µm.

4. System according to any of the preceding claims, wherein the at least one nozzle comprises a rotor (21), arranged to make rotary movements about a rotational axis (R).

5. System according to any of the preceding claims, wherein the at least one nozzle sprays the liquid towards the plastic film on the metal objects at an angle (α) of at most 15 degrees relative to a perpendicular (L) oriented to a surface of the plastic film of the metal objects, preferably at most 10 degrees, more preferably at most 5 degrees.

6. System according to any of the preceding claims, wherein the at least one nozzle is provided with 4 to 16 spray holes, preferably 8 to 12 spray holes.

7. System according to any of the preceding claims, wherein the at least one nozzle has a shape having at least two arms, wherein spray holes of the nozzle are distributed, preferably evenly distributed, over the at least two arms.

8. System according to any of the preceding claims, wherein the at least one nozzle is configured to be adjustable in a height direction (Z), preferably adjustable in height by at most 30 mm.

9. System according to any of the preceding claims, wherein the system comprises at least one cleaning arrangement (23), wherein the at least one cleaning arrangement is configured to clean the at least one nozzle and/or metal objects.

10. System according to any of the preceding claims, wherein the filtered rainwater comprises particles having a particle size of at most 5 µm.

11. System according to any of the preceding claims, wherein the system comprises a motor (29), arranged to drive the high-pressure pump, wherein the motor preferably is an electric motor.

12. System according to any of the preceding claims, wherein the system comprises an encoder (31), configured to determine a position (P) of the at least one nozzle.

13. System according to any of the preceding claims, wherein the system comprises a control unit (33) to control the pressure in the high-pressure pump and/or, when dependent to claim 12, the position of the at least one nozzle.

14. Method (101) for the removal of a plastic film (3) from metal objects, in particular traffic signs, with a liquid (7) under high pressure, the method comprising the steps of:
1) removing (105) the plastic film from the metal objects with the liquid under high pressure, wherein the high pressure is in the range of from 1800 to 2800 bar;
2) filtering (107) the liquid used to remove the plastic film from the metal objects, such that the filtered liquid comprises particles having a particle size of at most 10 µm;
3) reusing (109) the in step 2) filtered liquid to remove the plastic film from the metal objects,
preferably wherein the method for the removal of the plastic film from metal objects, in particular traffic signs, with the liquid under high pressure is carried out with a system (1) according to any of the claims 1 to 13.

15. Method according to claim 14, the method comprises one or both of the steps:
0) placing (103) the metal objects, provided with the plastic film, on a transportation means (35), wherein the plastic film is directed to the at least one nozzle;
4) filling and/or repleting (111) the liquid reservoir with filtered rainwater.
